# EUROPEAN PATENT SPECIFICATION

(11) **EP 2 867 591 B1**
(45) Date of publication and mention of the grant of the patent: **01.11.2017**
(21) Application number: 13803939.1
(22) Date of filing: 27.06.2013
(51) Int. Cl.: F24F 11/00, F24F 7/00, B60H 1/24, B61D 27/00

(54) **METHOD FOR OPERATING AN AIR CONDITIONING SYSTEM INTENDED FOR HEATING, COOLING AND/OR VENTILATING AN INNER SPACE OF A RAIL VEHICLE**
VERFAHREN ZUM BETREIBEN EINER KLIMAANLAGE ZUR ERWÄRMUNG, KÜHLUNG UND/ODER BELÜFTUNG DES INNENRAUMS EINES SCHIENENFAHRZEUGS
PROCÉDÉ POUR FAIRE FONCTIONNER UN SYSTÈME DE CLIMATISATION CONÇU POUR CHAUFFER, REFROIDIR ET/OU VENTILER UN ESPACE INTÉRIEUR D'UN VÉHICULE FERROVIAIRE

(30) Priority: 15.06.2012 IN 1727MU2012; 11.06.2013 AU 2013206257
(43) Date of publication of application: 06.05.2015
(73) Proprietor: Sigma Coachair Group Pty Ltd, Granville New South Wales 2142 (AU)
(72) Inventor: CHEN, David, Granville New South Wales 2142 (AU)
(74) Representative: Wiedemann, Markus
(86) International application number: PCT/AU2013/000699
(87) International publication number: WO 2013/185185

(56) References cited:
- EP-A2- 2 239 177
- EP-A2- 2 239 177
- US-A- 2 383 423
- US-A- 3 884 133
- US-A- 4 765 231
- US-B2- 8 195 335

## Description

### Field of the invention

The present invention relates to passenger carriage comprising an air conditioning system, and more particularly an air conditioning system for heating, cooling and/or ventilating an inner space of the passenger carriage, for example, a rail vehicle. Further, the present invention refers to a method for operating such an air conditioning system.

### Background of the invention

Air conditioning systems to be used in inner space of a passenger carriage, for example, a rail vehicle are known in the art. A German patent application DE 10 2008 050 344 A1 describes a ventilation/air conditioning apparatus for motor vehicles, with a fan which is arranged in a main intake duct and which is preceded by an adjustable air intake mixing device. The adjustable air intake mixing device can cut in or cut out different secondary intake ducts and thereby suck in air from different regions. Example of such a secondary intake duct includes a fresh-air duct, via which fresh air from the atmosphere is supplied to the main intake duct, and a circulating-air duct, via which circulating air from an inner space of the vehicle is supplied to the main intake duct.

In modem passenger carriages of rail vehicles which are equipped with the air conditioning system, there is usually no possibility of opening a window in order to ventilate or de-aerate the inner space. In such passenger carriages, there is the problem, in the event of a fire, of conveying smoke occurring in the inner space of the passenger carriage to out of the inner space into the atmosphere, in order to avoid poisoning or suffocating the persons located in the inner space of the passenger carriage.

US 4765231 A discloses an open loop air conditioning system, where fresh air being sucked and tempered by an air conditioning unit and fed by a supply fan motor M1 and supply duct system into the rooms of a building. Excess conditioned air is sucked from the rooms by another exhaust fan motor M3 through a return duct system to air conditioning unit to be exhausted through a chimney into atmosphere. In case of detection of smoke in one of the rooms, the one supply fan motor M1 is reversed in direction so as to evacuate the smoke through the supply duct system. According to US 3884133 A there is disclosed a method of controlling smoke in a building by a central ventilation system using a divided common return air duct for directing return air from a fire zone into one section of the common return air duct for exhaust.

US 8 195 335 B2 discloses an air conditioning system of a building. EP 2 239 177 A2 discloses a sensor to detect smoke and a control device able to control the inlet air and the outlet air.

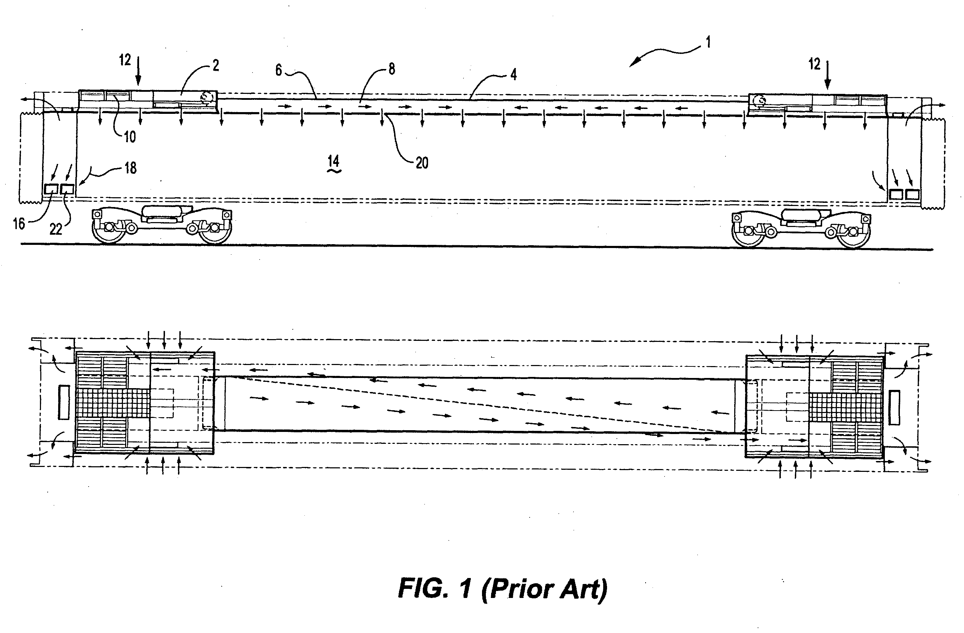

Figure 1 illustrates a diagrammatic cross section and a diagrammatic top view of a passenger carriage of the prior art, equipped with an air conditioning system. The air conditioning system shown in figure 1 as an HVAC unit (2) (Heating Ventilation and Air Conditioning) is designed as a roof air conditioning system, and in particular, the known HVAC units have an air stream mixing device for setting a main air stream (8) routed in a main air stream duct (6), as the ratio of a fresh-air stream (12) sucked in from the atmosphere via a fresh-air stream duct (10) and of a circulating-air stream (18) sucked in from the inner space of the passenger carriage via at least one circulating-air stream duct (16).

Furthermore, HVAC unit (2) has a main air stream blower following the air stream mixing device for setting the size of the main air stream (8) routed in the main air stream duct (6). Inflow ports (20) are connected to the main air stream duct (6) and to the inner space for the inflow of the main air stream (8) out of the main air stream duct (6) into the inner space and also outflow ports (22) are connected to the inner space and to the circulating-air stream duct (16), the outflow ports (22) are provided for the outflow of the circulating-air stream (18) out of the inner space into the circulating-air stream duct (16).

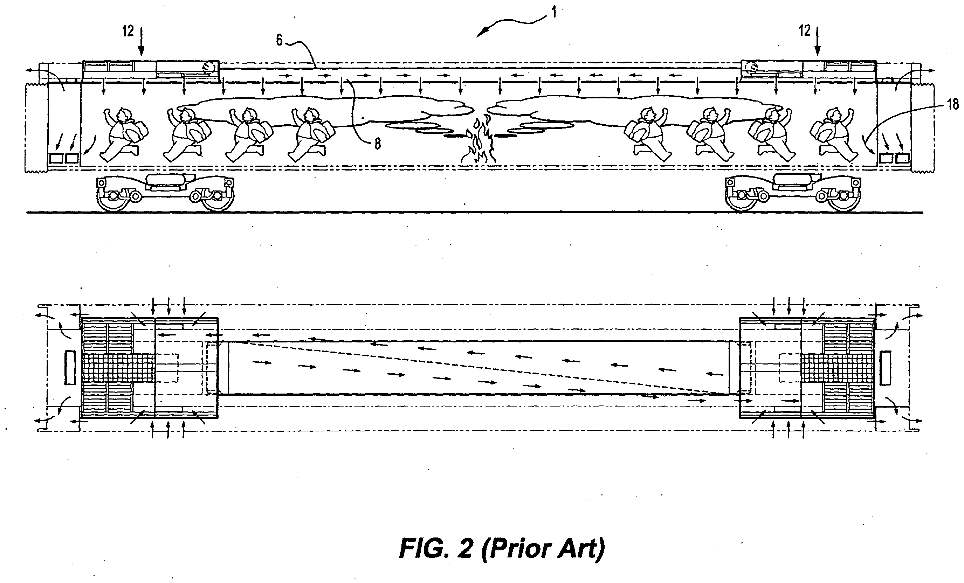

According to standard operating conditions of the HVAC unit (2), the main air stream (8) flows from the main air stream duct (6) through the inflow ports (20) into the inner space of the passenger carriage (1) and the circulating-air stream (18) flows from there through the outflow ports (22) into the circulating-air stream duct (16). The circulating-air stream (18), which is therefore circulated in the air conditioning system (HVAC unit (2)), is then mixed with the fresh-air stream (12) additionally supplied, as required, to form the main air stream (8) which is then, cooled or heated as required, is blown via the inflow ports (20) into the inner space by means of the main air stream blower. The passenger carriage is connected at both ends to further carriages, in particular likewise passenger carriages, and can exchange air with their inner spaces. However, if a fire breaks out (as shown in figure 2) in the inner space of the passenger carriage, smoke arises and the air mixed with smoke first being sucked out of the inner space via the outflow ports (22) into the circulating-air stream duct (16) in order to pass from there into the main air stream duct (6), with the result that the main air stream (8) is mixed with smoke before it is blown by means of the main air stream blower into the inner space again via the inflow ports (20). The passengers located in the inner space are then left only with the possibility of escaping into adjoining passenger carriages to avoid being harmed by smoke poisoning or suffocation.

Accordingly, there exist a need to provide air conditioning system (HVAC unit) for the passenger carriage, for example, the rail vehicle which overcomes the drawbacks of the prior art.

### Objects of the invention

An object of the present invention is to provide a passenger carriage comprising an air conditioning system and a method for operating such air conditioning system in such a way that the transport of passengers in the passenger carriage can be rendered safer.

### Summary of the invention

In one aspect, the present invention provides a passenger carriage comprising an air conditioning system for heating, cooling and/or ventilating an inner space of the passenger carriage, the air conditioning system comprising:
at least one fresh-air blower for sucking in a fresh air stream from atmosphere;
at least one fresh-air stream duct for carrying sucked fresh-air;
at least one circulating-air stream duct for sucking a circulating-air stream from the inner space of the passenger carriage;
at least one main air stream duct capable of receiving a main air stream formed by the fresh-air stream and the circulating-air stream;
an air stream mixing device for setting the main air stream routed in at least one main air stream duct;
a main air stream blower for setting size and direction of flow of the main air stream routed in the at least one main air stream duct;
at least one flow connection port configured between the main air stream duct and the atmosphere, the at least one flow connection port capable of being opened or closed;
at least one actuation device for actuating at least one actuation element to open or close at least one flow connection port;
a plurality of inflow ports connecting the main air stream duct and the inner space of the passenger carriage for the inflow of the main air stream into the inner space of the passenger carriage;
a plurality of outflow ports connecting the inner space of the passenger carriage and the circulating-air stream duct for the outflow of the circulating-air stream out of the inner space into the circulating-air stream duct;
a smoke alarm for detecting smoke in the inner space of the passenger carriage; and
a control device for control of the main air stream blower, air stream mixing device, the actuation device and the smoke alarm, wherein the smoke alarm is signal- connected to the control device,
wherein under normal operating condition, the main air stream flows through the inflow ports into the inner space and the circulating-air stream flows through the outflow ports into the at least one circulating-air stream duct and the flow connection port between the main air stream duct and the atmosphere is closed, further
under smoke condition in the inner space, the control device reverse the direction of flow of the main air stream in order to suck smoke-laden air via the inflow ports out of the inner space into the main air stream duct, and the flow connection port between the main air stream duct and the atmosphere is opened, in order to conduct the smoke-laden air sucked into the atmosphere, wherein
wherein upon signaling smoke in the inner space of the passenger carriage, the control device controls the air stream mixing device in such a way that the ratio of the sucked-in fresh-air stream and of the circulating-air stream sucked in from the inner space is set in the main air stream such that the sucked-in fresh-air stream is essentially equal to zero.

In another aspect, the present invention provides a method for operating an air conditioning system for heating, cooling and/or ventilating an inner space of a passenger carriage, the method comprising:
monitoring of the inner space of the passenger carriage to determine whether smoke indicating a fire is present in the inner space or not by means of a smoke alarm;
operating the air conditioning system under standard operating condition in the event that no smoke indicating a fire is detected, in which a main air stream is formed as a ratio of a fresh-air stream sucked in from the atmosphere and of a circulating-air stream sucked in from the inner space and is cooled or heated, as required, is routed into the inner space; and
operating the air conditioning system in the event that smoke indicating a fire is detected in the inner space of the passenger carriage by reversing the direction of flow of the main air stream with respect to the standard operating conditions, in order to mix or suck smoke-laden air from the inner space into the main air stream having a reversed direction of flow, and discharge of at least part of the main air stream into the atmosphere, wherein
in the event that smoke indicating a fire is detected in the inner space of the passenger carriage, the ratio of the sucked-in fresh-air stream and of the circulating-air stream sucked in from the inner space is set in the main air stream such that the sucked-in fresh-air stream is essentially equal to zero.

### Brief description of the drawings

Figure 1 and 2 shows schematic drawing of air conditioning system of the prior art used in passenger carriages;
Figure 3 shows a diagrammatic top view of an heating ventilation and air conditioning (HVAC) unit for a passenger carriage being operated under standard operating conditions, according to a preferred embodiment of the invention; Figure 4 shows a perspective view of the HVAC unit of figure 3 under standard operating conditions;
Figure 5 shows a diagrammatic cross section and a top view of a passenger carriage equipped with the HVAC unit according to figure 3 and figure 4 operated under fire operating conditions;
Figure 6 shows a diagrammatic top view of the HVAC unit under fire operating conditions;
Figure 7 shows a perspective view of the HVAC unit under fire operating conditions;
Figure 8 shows a schematic drawing of the HVAC unit under standard operating conditions; and
Figure 9 shows a schematic drawing of the HVAC unit under fire operating conditions.

### Detailed description of the embodiments

The foregoing objects of the present invention are accomplished and the problems and shortcomings associated with the prior art, techniques and approaches are overcome by the present invention as described below in the preferred embodiment.

The present invention provides an air conditioning system for heating, cooling and/or ventilating an inner space of a passenger carriage, for example, a rail vehicle in which smoke can be removed as quickly as possible therefrom. Further, the air conditioning system circulates air flow from other passenger carriages into the passenger carriage having smoke therein because of negative pressure gradient as the smoke-contaminated air is sucked away in the atmosphere.

The present invention is illustrated with reference to the accompanying drawings, throughout which reference numbers indicate corresponding parts in the various figures. These reference numbers are shown in bracket in the following description.

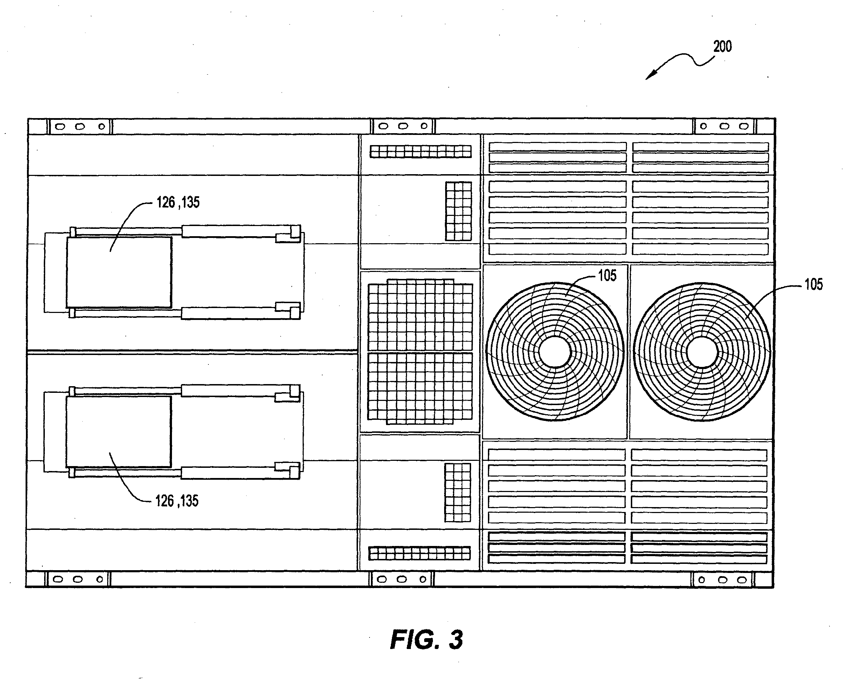

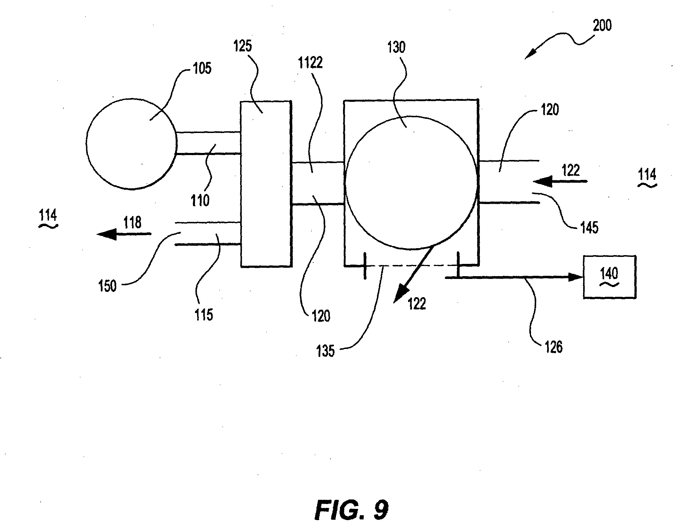

Referring now to figure 3-9, there are shown various views of air conditioning system for heating, cooling and/or ventilating an inner space of a passenger carriage, in accordance with an aspect of the present invention. Specifically, figure 3-9 illustrates the air conditioning system (200) (also referred as heating, ventilation and air conditioning unit (200) and hereinafter referred 'the HVAC unit (200)'). The HVAC unit (200) comprises at least two fresh-air blowers (105), at least one fresh-air stream duct (110), at least one circulating-air stream duct (115), at least one main air stream duct (120), an air stream mixing device (125), a main air stream blower (130), at least one flow connection port (135), at least one actuation device (140), a plurality of inflow ports (145), a plurality of outflow ports (150), a smoke alarm (not shown) , and a control device (not shown).

The HVAC unit (200) is arranged on roof (160) of a passenger carriage (100), for example, a rail vehicle. The HVAC unit (200) in this case can be placed as a mounting unit onto the roof (160) of the passenger carriage (100). In an embodiment, the HVAC unit (200) may be integrated into a roof aperture. The passenger carriage (100) is connected, for example at both ends, to further carriages, in particular further passenger carriages, and can exchange air with their inner spaces.

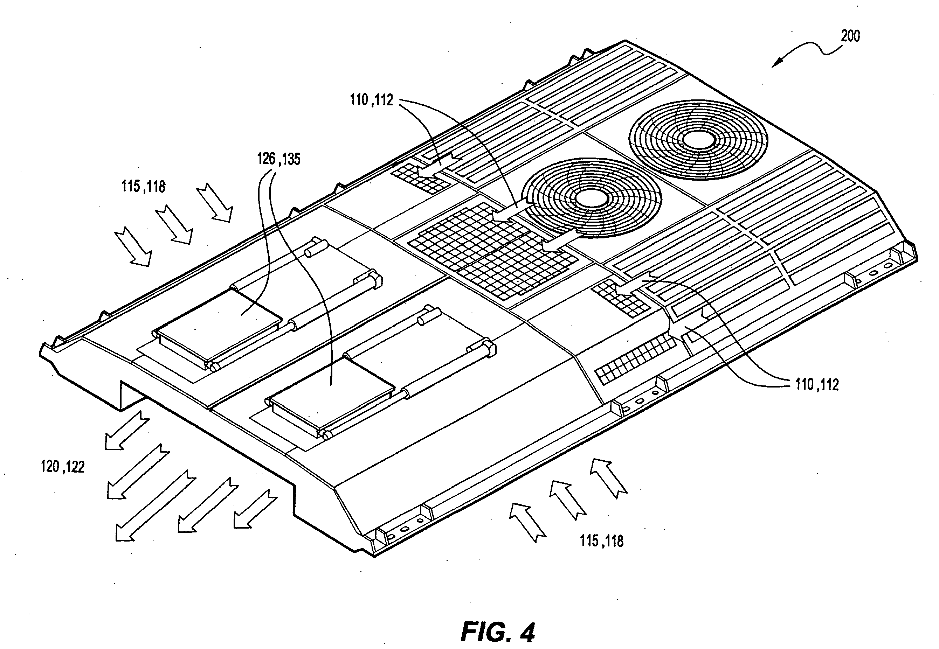

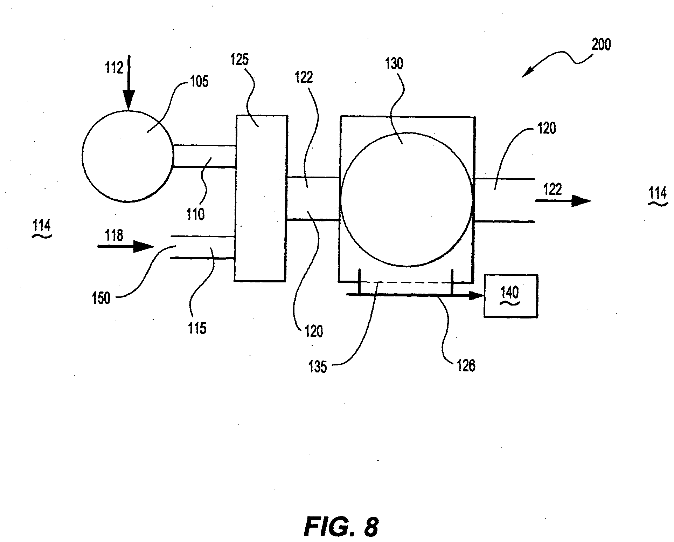

The HVAC unit (200) comprises at least two fresh-air blowers (105). For purpose of explanation two air blowers (105) are shown. The air blowers (105) are, for example, rotary fans. The air blowers (105) suck fresh air (112) into at least one fresh-air stream ducts (110). The HVAC unit (200) further comprises at least two slides (126). For purpose of explanation two slides (126) are shown. The slides (126) can be actuated linearly by an actuation device (140) and which, as a function of their actuation travel by means of the actuation device (140), in each case close a plurality of flow connection ports (135) in a main air stream duct (120) or release the flow connection ports (135) to a specific degree. Specifically, figure 4 and figure 8 show the slides (126) in a closing position which closes the flow connection ports (135) and corresponds to standard operating conditions of the HVAC unit (200). The standard operating conditions in this case embrace customary or normal operating conditions, such as, for example, the control of the temperature of an inner space (114) of the passenger carriage (100) to a desired temperature or control of the ventilation of the inner space (114) of the passenger carriage (100).

Under these normal conditions, the HVAC unit (200) operates in the same way as the air conditioning system described above with regard to the prior art and shown in figure 1 and figure 2. Specifically, the HVAC unit (200) comprises an air stream mixing device (125) for setting a main air stream (122), routed in, for example, two main air stream ducts (120), as the ratio of a fresh-air stream (112) sucked in from the atmosphere via the fresh-air stream ducts (110) and of a circulating-air stream (118) sucked in from the inner space (114), via, for example, two circulating-air stream ducts (115).

Furthermore, the main air stream blower (130) following the air stream mixing device (125), for setting the size of the main air stream (122) is routed in the main air stream ducts (120). In contrast to the prior art, this main air stream blower (130) is reversible, that is to say it has a type of operation in which the direction of flow, prevailing under standard operating conditions, of the main air stream (122) from the main air stream ducts (120) through the plurality of inflow ports (145) into the inner space (114) can be reversed. Specifically, the air is then sucked out of the inner space (114) via the plurality of inflow ports (145) into the main air stream ducts (120).

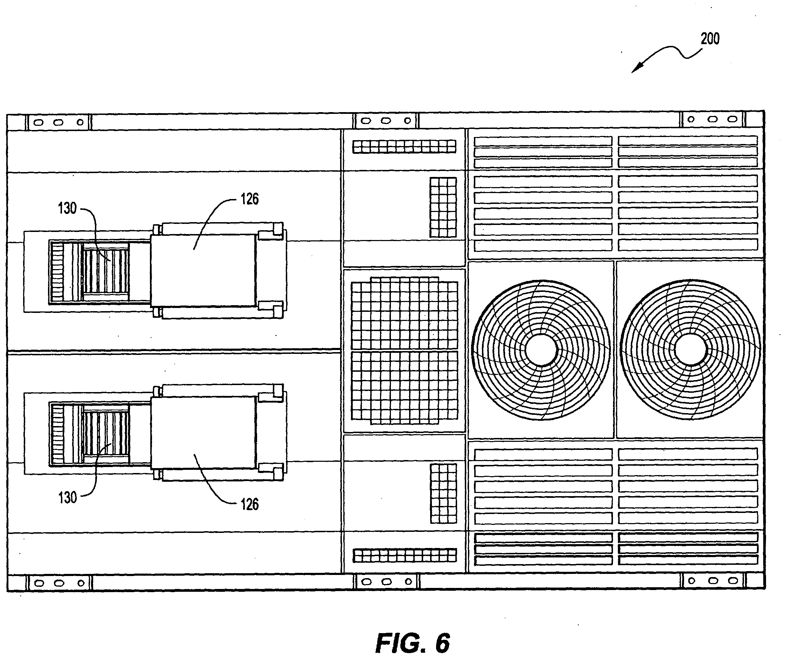

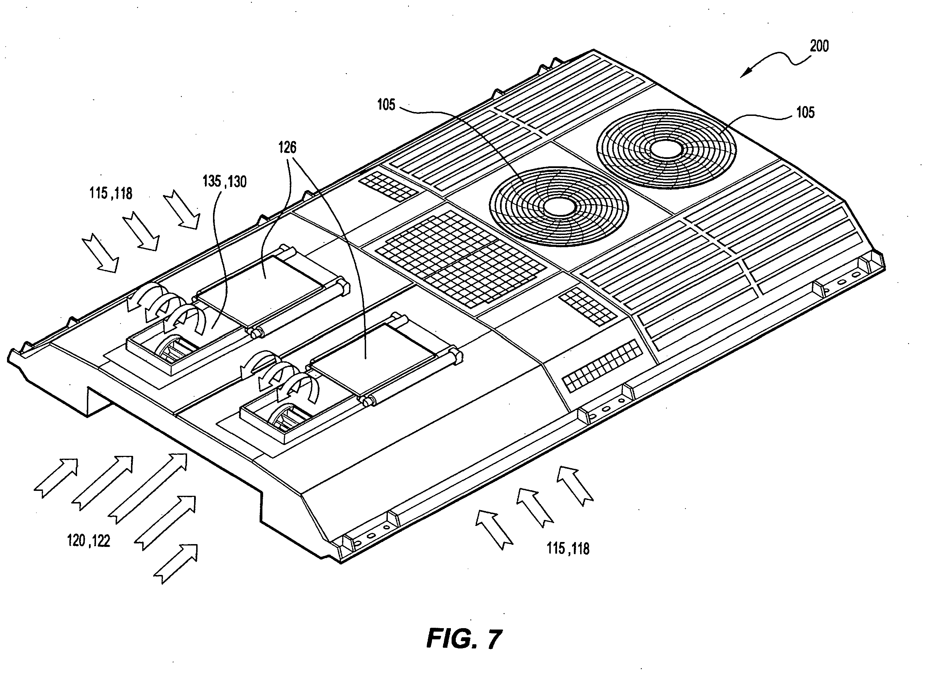

In an embodiment, the main air stream blower (130) is formed by two drum-type blowers which are arranged in the main air stream ducts (120) in the region of the flow connection ports (135) and the axes of rotation of which are in each case arranged perpendicularly to the longitudinal extent of the respective main air stream duct (120) as shown in figure 6 and figure 7.

The plurality inflow ports (145) connects the main air stream ducts (120) and to the inner space (114). Specifically, the plurality of inflow ports (145) allows the inflow of the main air stream (122) into the inner space (114). Further, the plurality of outflow ports (150) connects the inner space (114) and the circulating-air stream ducts (115). Specifically, the plurality of outflow ports (150) are provided for the outflow of the circulating-air stream (118) from the inner space (114) into the circulating-air stream ducts (115).

According to the standard operating conditions of the HVAC unit (200), the main air stream (122) flows from the main air stream ducts (120) through the plurality inflow ports (145) into the inner space (114) and the circulating-air stream (118) flows through the plurality of outflow ports (150) into the circulating-air stream ducts (115). The circulating-air stream (118) is then mixed with the fresh-air stream (112) additionally supplied, as required, to form the main air stream (122) which is then, cooled or heated as required by means of a combined heating/cooling device (not shown) and thereafter blown via the plurality of inflow ports (145) into the inner space (114). The HVAC unit (200) under normal standard operating conditions is illustrated in figure 3, figure 4 and figure 8.

Furthermore, the HVAC unit (200) comprises a control device (not shown) for control of the main air stream blower (130), the air stream mixing device (125), the actuation device (140) and the smoke alarm (not shown).

In an embodiment, the control device is an electronic control device for controlling the air stream mixing device (125) for setting the main air stream (122) routed in the main air stream ducts (120) as the ratio of the fresh-air stream (112) sucked in from the atmosphere via the fresh-air stream ducts (110) and of the circulating-air stream (118) sucked in from the inner space (114) via the circulating-air stream ducts (115). Furthermore, the electronic control device controls the main air stream blower (130), following the air stream mixing device (125) for setting the size and direction of flow of the main air stream (122) routed in the main air stream ducts (120) and also the actuation device (140) for the slides (126) in order to open or close the flow connection ports (135) in the main air stream ducts (120).

Furthermore, at least one smoke alarm, (not shown) for detecting smoke in the inner space (114) is provided in the inner space (114) or on its lining. The smoke alarm being signal-connected to the control device in such a way that the occurrence of smoke in the inner space (114) of the passenger carriage (100) such as the rail vehicle can be signalled to the control device by the smoke alarm.

The control device is designed, particularly by virtue of stored control routines, such that, when smoke is signalled in the inner space (114) by the smoke alarm, the control device controls the main air stream blower (130) and the actuation device (140) in such a way that the direction of flow of the main air stream (122) is reversed, in order to suck smoke-laden air via the plurality of inflow ports (145) out of the inner space (114) into the main air stream ducts (120).

This reversal in the direction of flow of the main air stream (122) is achieved here, for example, by reversed or inverted operation of the main air blower (130) which is activated correspondingly by the electronic control device. Furthermore, the actuation device (140) is activated by the electronic control device in order to push the slides (126) away from the flow connection ports (135) so as to open the flow connections between the main air stream ducts (120) and the atmosphere, so that the smoke-laden air sucked into the main air stream ducts (120) can be conducted into the atmosphere.

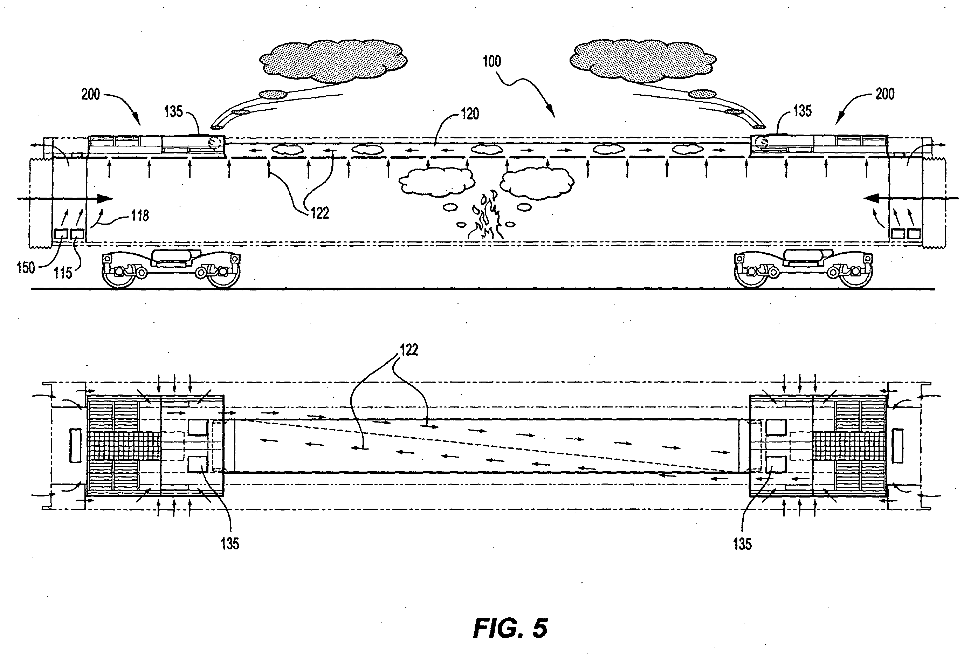

Furthermore, in the event that smoke indicating a fire is detected in the inner space (114) of the passenger carriage (100), the ratio of the sucked-in fresh-air stream (110) and of the circulating-air stream (115) sucked in from the inner space (114) is set in the main air stream (122) such that the sucked-in fresh-air stream (112) is essentially equal to zero. The HVAC unit (200) in the event of a fire is illustrated in figure 5, figure 7 and figure 9. The two horizontal arrows in figure 5 indicate in each case at the end of the passenger carriage (100), if further rail vehicles or passenger carriages are coupled to the passenger carriage (100) having the HVAC unit (200) described herein, circulating air can flow on from these passenger carriages into the passenger carriage (100), because a negative pressure gradient occurs in the passenger carriage (100) as the smoke-contaminated air is sucked away.

In a preferred embodiment, the air stream mixing device (125), the main air stream blower (130), the control device, the main air stream ducts (120), at least part of the circulating-air stream ducts (115), the fresh-air stream ducts (110) and also the fresh-air blower (105) and/or the combined heating/cooling device are combined in the HVAC unit (200). The HVAC unit (200) then communicates with the smoke alarm in the inner space (114) of the passenger carriage (100) so that the smoke alarm can send signals dependent on the occurrence of smoke to the electronic control device integrated in the HVAC unit (200).

In another aspect, the present invention provides a method for operating an air conditioning system intended for heating, cooling and/or ventilating an inner space of a rail vehicle. The method is described in conjunction with the system (200). The method comprises monitoring the inner space of the passenger carriage to determine whether smoke indicating a fire is present in the inner space or not by means of a smoke alarm. Further, the method includes operating the air conditioning system under standard operating condition in the event that no smoke indicating a fire is detected, in which a main air stream is formed as a ratio of a fresh-air stream sucked in from the atmosphere and of a circulating-air stream sucked in from the inner space and is cooled or heated, as required, is routed into the inner space.

Furthermore, the method includes operating the air conditioning system under in the event that smoke indicating a fire is detected in the inner space of the passenger carriage by reversing the direction of flow of the main air stream with respect to the standard operating conditions, in order to mix or suck smoke-laden air from the inner space into the main air stream having a reversed direction of flow, and discharge at least part of the main air stream into the atmosphere.

Specifically, in the event when smoke indicating a fire is detected in the inner space of the passenger carriage such as rail vehicle, the ratio of the sucked-in fresh-air stream and of the circulating-air stream sucked in from the inner space is set in the main air stream such that the sucked-in fresh-air stream is essentially equal to zero.

With the aid of the method according to the present invention, the situation is avoided where, in the event of a fire in the inner space (114) of the passenger carriage (100), air sucked in with the circulating-air stream (118) and contaminated with smoke is blown back into the inner space (114) again within the main air stream (122). Instead, the smoke-contaminated air is discharged into the atmosphere. The method according to the invention consequently contributes decisively for increase in safety.

Preferably, in the event that smoke indicating a fire is detected in the inner space (114) of the passenger carriage (100), the ratio of the sucked-in fresh-air stream (110) and of the circulating-air stream (115) sucked in from the inner space (114) is set in the main air stream such that the sucked-in fresh-air stream is essentially equal to zero. Consequently, a counter flow of the fresh-air stream contrary to the then reversed main air stream is prevented. Further, the situation is prevented where the development of the fire is accelerated as a result of the further supply of fresh-air oxygen.

In addition, in the event that smoke indicating a fire is detected in the inner space (114) of the passenger carriage (100), the ratio of the sucked-in fresh-air stream (112) and of the circulating-air stream (118) sucked in from the inner space (114) is set in the main air stream (122) such that the sucked-in fresh-air stream (112) is essentially equal to zero.

In a preferred embodiment of the present invention, the air stream mixing device (125), the main air stream blower (130), the control device, the main air stream duct (120), at least part of the at least one circulating-air stream duct (115), the fresh-air stream duct (110) and the fresh-air blower (105) and/or the combined heating/cooling device are combined into one structural unit (200) which is arranged on or in the roof (160) of the passenger carriage (100), for example , the rail vehicle.

The foregoing objects of the invention are accomplished and the problems and shortcomings associated with prior art techniques and approaches are overcome by the present invention described in the present embodiment. It should be realized that the present invention is not limited to the embodiments described hereinabove and illustrated in the drawings. Rather, a person skilled in the art will realize that many changes and modifications may be performed within the scope of the appended claims.

## Claims

1. Passenger carriage (100) comprising an air conditioning system for heating, cooling and/or ventilating an inner space (114) of the passenger carriage (100), the air conditioning system (102) comprising:
a) at least one air blower (105) for sucking in fresh air stream (112) from atmosphere;
b) at least one fresh-air stream duct (110) for carrying sucked fresh-air stream (112);
c) at least one circulating-air stream duct (115) for sucking a circulating-air stream from the inner space (114) of the passenger carriage (100);
d) at least one main air stream duct (120) capable of receiving a main air stream (122) formed by the fresh-air stream (112) and the circulating-air stream (118);
e) an air stream mixing device (125) for setting the main air stream (122) routed in the at least one main air stream duct (120);
f) a main air stream blower (130) for setting size and direction of flow of the main air stream (122) routed in the at least one main air stream duct (120);
g) a plurality of inflow ports (145) connecting the main air stream duct (120) and the inner space (114) of the passenger carriage (100) for the inflow of the main air stream (122) into the inner space (114) of the passenger carriage (100);
h) a plurality of outflow ports (150) connecting the inner space (114) of the passenger carriage (100) and the circulating-air stream duct (115) for the outflow of the circulating-air stream (118) out of the inner space (114) into the circulating-air stream duct (115);
i) at least one flow connection port (135) configured between the main air stream duct (120) and the atmosphere, the at one flow connection port (135) capable of being opened or closed;
j) at least one actuation device (140) for actuating at least one actuation element (126) to open or close at least one flow connection port (135); **characterized by**
k) a smoke alarm for detecting smoke in the inner space (114) of the passenger carriage (100); and
l) a control device for control of the main air stream blower (130), air stream mixing device (125), the actuation device (140) and the smoke alarm, wherein the smoke alarm is signal-connected to the control device, wherein
m) under normal operating condition, the main air stream (122) flows through the inflow ports (145) into the inner space (114) and the circulating-air stream (118) flows through the outflow ports (150) into the at least one circulating-air stream duct (115) and the flow connection port (135) between the main air stream duct (120) and the atmosphere is closed, further
n) under smoke condition in the inner space (114), the control device reverse the direction of flow of the main air stream (122) in order to suck smoke-laden air via the inflow ports (145) out of the inner space (114) into the main air stream duct (120), and the flow connection port (135) between the main air stream duct (120) and the atmosphere is opened, in order to conduct the smoke-laden air sucked into the atmosphere, and
o) wherein upon signaling smoke in the inner space (114) of the passenger carriage (100), the control device controls the air stream mixing device (125) in such a way that the ratio of the sucked-in fresh-air stream (112) and of the circulating-air stream (118) sucked in from the inner space (114) is set in the main air stream (122) such that the sucked-in fresh-air stream (112) is essentially equal to zero.

2. Passenger carriage (100) as claimed in claim 1, wherein the actuation element (126) is a slide which overlap the flow connection port (135) in the main air stream duct (120) to open or close the flow connection port (135).

3. Passenger carriage (100) as claimed in claim 1, wherein the main air stream blower (130) is formed by at least one drum-type blower which is arranged in the main air stream duct (120) in the region of the flow connection port (135) and the axis of rotation the main air stream blower (130) is arranged perpendicularly to the longitudinal extent of the at least one main air stream duct (120).

4. Passenger carriage (100) as claimed in claim 1, wherein the control device deactivates the fresh-air blower (105) when smoke is signaled in the inner space (144) of the passenger carriage (100).

5. Passenger carriage (100) as claimed in claim 1, wherein the main air stream (122) is heated or cooled by means of a combined heating/cooling device.

6. Passenger carriage (100) as claimed in claim 1, wherein the inflow ports (145) are arranged on the roof side (4) with respect to the inner space (114) of the passenger carriage (100) and the outflow ports (150) are arranged on the floor side of the passenger carriage (100).

7. A method for operating an air conditioning system (102) for heating, cooling and/or ventilating an inner space (114) of a passenger carriage (100) as defined in one of the preceding claims, the method being **characterized by** the following steps:
a) monitoring of the inner space (114) of the passenger carriage (100) to determine whether smoke indicating a fire is present in the inner space (114) or not by means of a smoke alarm;
b) operating the air conditioning system (102) under standard operating condition in the event that no smoke indicating a fire is detected, in which a main air stream (122) is formed as a ratio of a fresh-air stream (112) sucked in from atmosphere and of a circulating-air stream (115) sucked in from the inner space (114) and is cooled or heated, as required, is routed into the inner space (114); and
c) operating the air conditioning system (102) under in the event that smoke indicating a fire is detected in the inner space (114) of the passenger carriage (100) by reversing the direction of flow of the main air stream (122) with respect to the standard operating conditions, in order to mix or suck smoke-laden air from the inner space (114) into the main air stream (122) having a reversed direction of flow, and discharge of at least part of the main air stream (122) into the atmosphere, and
d) wherein in the event that smoke indicating a fire is detected in the inner space (114) of the passenger carriage (100), the ratio of the sucked-in fresh-air stream (112) and of the circulating-air stream (118) sucked in from the inner space (114) is set in the main air stream (122) such that the sucked-in fresh-air stream (118) is essentially equal to zero.

## Patentansprüche

1. Reisezugwagen (100), umfassend ein Klimaanlagensystem zum Heizen, Kühlen und/oder Belüften eines Innenraums (114) des Reisezugwagens (100), wobei das Klimaanlagensystem (102) umfasst:
a) zumindest ein Gebläse (105) zum Ansaugen eines Frischluftstroms (112) aus der Atmosphäre;
b) zumindest einen Frischluftstromkanal (110) zum Führen des Frischluftstroms (112);
c) zumindest einen Umluftstromkanal (115) zum Ansaugen eines Umluftstroms aus dem Innenraum (114) des Reisezugwagens (100);
d) zumindest einen Hauptluftstromkanal (120), der dazu befähigt ist, einen durch den Frischluftstrom (112) und den Umluftstrom (118) gebildeten Hauptluftstrom (122) aufzunehmen;
e) eine Luftstrommischeinrichtung (125) zum Festlegen des in dem zumindest einen Hauptluftstromkanal (120) geleiteten Hauptluftstroms (122);
f) ein Hauptluftstromgebläse (130) zum Festlegen der Größe und der Richtung des Stroms des in dem zumindest einen Hauptluftstromkanal (120) geleiteten Hauptluftstroms (122);
g) eine Vielzahl von Einströmöffnungen (145), die den Hauptluftkanal (120) und den Innenraum (114) des Reisezugwagens (100) für den Einstrom des Hauptluftstroms (122) in den Innenraum (114) des Reisezugwagens (100) verbinden;
h) eine Vielzahl von Ausströmöffnungen (150), die den Innenraum (114) des Reisezugwagens (100) und den Umluftstromkanal (115) für den Ausstrom des Umluftstroms (118) aus dem Innenraum (114) in den Umluftstromkanal (115) verbinden;
i) zumindest eine Stromverbindungsöffnung (135), die zwischen dem Hauptluftstromkanal (120) und der Atmosphäre konfiguriert ist, wobei die zumindest eine Stromverbindungsöffnung (135) dazu befähigt ist, geöffnet oder geschlossen zu werden;
j) zumindest eine Stelleinrichtung (140) zum Betätigen zumindest eines Stellelements (126) zum Öffnen oder Schließen zumindest einer Stromverbindungsöffnung (135);
k) einen Rauchmelder zum Erfassen von Rauch in dem Innenraum des Reisezugwagens (100); und
l) eine Steuereinrichtung zur Steuerung des Hauptluftstromgebläses (130), der Luftstrommischeinrichtung (135), der Stelleinrichtung (149) und des Rauchmelders, wobei der Rauchmelder mit der Steuereinrichtung signalverbunden ist, wobei
m) unter einer normalen Betriebsbedingung der Hauptluftstrom (122) durch die Einströmöffnungen (145) in den Innenraum (114) strömt, der Umluftstrom (118) durch die Ausströmöffnungen (150) in den zumindest einen Umluftstromkanal (115) strömt und die Stromverbindungsöffnung (135) zwischen dem Hauptluftstromkanal (120) und der Atmosphäre geschlossen ist, ferner
n) unter einer Rauchbedingung in dem Innenraum (114) die Steuereinrichtung die Strömungsrichtung des Hauptluftstroms (122) umkehrt, um rauchbeladene Luft über die Einströmöffnungen (145) aus dem Innenraum (114) in den Hauptluftstromkanal (120) zu saugen, und die Stromverbindungsöffnung (135) zwischen dem Hauptluftstromkanal (120) und der Atmosphäre geöffnet ist, um die angesaugte rauchbeladene Luft in die Atmosphäre zu befördern, und
o) wobei bei einer Signalisierung von Rauch in dem Innenraum (114) des Reisezugwagens (100) die Steuereinrichtung die Luftstrommischeinrichtung (125) derart steuert, dass das Verhältnis des angesaugten Frischluftstroms (112) und des aus dem Innenraum (114) angesaugten Umluftstroms (118) in dem Hauptluftstrom (122) so festgelegt wird, dass der angesaugte Frischluftstrom (112) im Wesentlichen gleich Null ist.

2. Reisezugwagen (100) nach Anspruch 1, bei dem das Betätigungselement (126) ein Schieber ist, welcher die Stromverbindungsöffnung (135) in dem Hauptluftstromkanal (120) überlagert, um die Stromverbindungsöffnung (135) zu öffnen und zu schließen.

3. Reisezugwagen (100) nach Anspruch 1, bei dem das Hauptluftstromgebläse (130) durch zumindest ein Walzengebläse gebildet wird, welcher in dem Hauptluftstromkanal (120) in der Region der Stromverbindungsöffnung (135) angeordnet ist, und die Rotationsachse des Hauptluftstromgebläses (130) senkrecht zu der Längsausdehnung des zumindest einen Hauptluftstromkanals (120) angeordnet ist.

4. Reisezugwagen (100) nach Anspruch 1, bei dem die Steuereinrichtung das Frischluftgebläse (105) deaktiviert, wenn Rauch in dem Innenraum (144) des Reisezugwagens signalisiert wird.

5. Reisezugwagen (100) nach Anspruch 1, bei dem der Hauptluftstrom (122) mittels einer kombinierten Heiz/Kühl-Einrichtung geheizt oder gekühlt wird.

6. Reisezugwagen (100) nach Anspruch 1, bei dem die Einströmöffnungen (145) auf der Dachseite (4) in Bezug auf den Innenraum (114) des Reisezugwagens (100) angeordnet sind und die Ausströmöffnungen (150) auf der Bodenseite des Reisezugwagens (100) angeordnet sind.

7. Verfahren zum Betreiben eines Klimaanlagensystems (102) zum Heizen, Kühlen und/oder Belüften eines Innenraums (114) des Reisezugwagens (100) wie in einem der vorangehenden Ansprüche definiert, wobei das Verfahren **gekennzeichnet ist durch** die folgenden Schritte:
a) Überwachen des Innenraums (114) des Reisezugwagens (100) zum Ermitteln, ob ein Feuer anzeigender Rauch in dem Innenraum (114) vorhanden ist oder nicht, mittels eines Rauchmelders;
b) in dem Fall, in dem kein ein Feuer anzeigender Rauch erfasst wird, Betreiben des Klimaanlagensystems (102) unter einer Normalbetriebsbedingung, in welcher ein Hauptluftstrom (122), der als ein Verhältnis eines aus der Atmosphäre angesaugten Frischluftstroms (122) und eines aus dem Innenraum (114) angesaugten Umluftstroms (115) gebildet wird und bedarfsweise gekühlt oder erwärmt wird, in den Innenraum (114) geleitet wird; und
c) in dem Fall, in dem ein Feuer anzeigender Rauch in dem Innenraum (114) des Reisezugwagens (100) erfasst wird, Betreiben des Klimaanlagensystems (102) durch Umkehren der Strömungsrichtung des Hauptluftstroms (122) in Bezug auf die Normalbetriebsbedingungen, um rauchbeladene Luft aus dem Innenraum (114) in den Hauptluftstrom (122) mit einer umgekehrten Strömungsrichtung zu mischen oder zu saugen und zumindest einen Teil des Hauptluftstroms (122) in die Atmosphäre auszuleiten, und
d) wobei in dem Fall, in dem ein Feuer anzeigender Rauch in dem Innenraum (114) des Reisezugwagens (100) erfasst wird, das Verhältnis des angesaugten Frischluftstroms (112) und des aus dem Innenraum (114) angesaugten Umluftstroms (118) in dem Hauptluftstrom (122) derart festgelegt wird, dass der angesaugte Frischluftstrom (118) im Wesentlichen gleich Null ist.

## Revendications

1. Voiture de passagers (100) comprenant un système de climatisation pour le chauffage, le refroidissement et/ou la ventilation d'un espace intérieur (114) de la voiture de passagers (100), le système de climatisation (102) comprenant :
a) au moins une soufflante d'air (105) pour aspirer un flux d'air frais (112) de l'atmosphère ;
b) au moins un conduit de flux d'air frais (110) pour porter le flux d'air frais aspiré (112) ;
c) au moins un conduit de flux d'air de circulation (115) pour aspirer un flux d'air de circulation de l'espace intérieur (114) de la voiture de passagers (100) ;
d) au moins un conduit de flux d'air principal (120) capable de recevoir un flux d'air principal (122) formé par le flux d'air frais (112) et le flux d'air de circulation (118) ;
e) un dispositif de mélange de flux d'air (125) pour régler le flux d'air principal (122) dirigé dans le conduit de flux d'air principal qui existe au moins (120) ;
f) une soufflante de flux d'air principal (130) pour régler la grandeur et la direction du flux d'air principal (122) dirigé dans le conduit de flux d'air principal qui existe au moins (120) ;
g) une pluralité d'orifices d'entrée (145) reliant le conduit de flux d'air principal (120) et l'espace intérieur (114) de la voiture de passagers (100) pour faire entrer le flux d'air principal (122) dans l'espace intérieur (114) de la voiture de passagers (100) ;
h) une pluralité d'orifices de sortie (150) reliant l'espace intérieur (114) de la voiture de passagers (100) et le conduit d'air de circulation (115) pour la sortie du flux d'air de circulation (118) hors de l'espace intérieur (114) dans le conduit d'air de circulation (115) ;
i) au moins une entrée de raccordement de flux (135) configurée entre le conduit de flux d'air principal (120) et l'atmosphère, l'entrée de raccordement de flux qui existe au moins (135) étant capable d'être ouverte ou fermée ;
j) au moins un dispositif d'actionnement (140) pour actionner au moins un élément d'actionnement (126) pour ouvrir ou fermer au moins une entrée de raccordement de flux (135)
**caractérisée par**
k) un détecteur de fumée pour détecter de la fumée dans l'espace intérieur (114) de la voiture de passagers (100) et
l) un dispositif de commande pour commander la soufflante de flux d'air principal (130), le dispositif de mélange de flux d'air (125), le dispositif d'actionnement (140) et le détecteur de fumée, le détecteur de fumée étant connecté au signal du dispositif de commande, cependant que
m) dans des conditions de fonctionnement normales, le flux d'air principal (122) s'écoule à travers les orifices d'entrée (145) dans l'espace intérieur (114) et le flux d'air de circulation (118) s'écoule à travers les orifices de sortie (150) dans le conduit de flux d'air de circulation qui existe au moins (115) et l'entrée de raccordement de flux (135) entre le conduit de flux d'air principal (120) et l'atmosphère est fermée, de plus
n) dans des conditions de fumée dans l'espace intérieur (114), le dispositif de commande inverse la direction de flux du flux d'air principal (122) pour aspirer l'air chargé de fumée par les orifices d'entrée (145) hors de l'espace intérieur (114) dans le conduit de flux d'air principal (120) et l'entrée de raccordement de flux (135) entre le conduit de flux d'air principal (120) et l'atmosphère est ouverte pour conduire l'air chargé de fumée aspiré dans l'atmosphère et
o) cependant qu'après avoir signalé de la fumée dans l'espace intérieur (114) de la voiture de passagers (100), le dispositif de commande commande le dispositif de mélange de flux d'air (125) de telle manière que le rapport du flux d'air frais aspiré (112) et du flux d'air de circulation (118) aspiré de l'espace intérieur (114) est réglé dans le flux d'air principal (122) de telle manière que le flux d'air frais aspiré (112) est sensiblement égal à zéro.

2. Voiture de passagers (100) selon la revendication 1, l'élément d'actionnement (126) étant une coulisse qui recouvre en chevauchant l'entrée de raccordement de flux (135) dans le conduit de flux d'air principal (120) pour ouvrir ou fermer l'entrée de raccordement de flux (135).

3. Voiture de passagers (100) selon la revendication 1, la soufflante de flux d'air principal (130) étant formée par au moins une soufflante de type tambour qui est placée dans le conduit de flux d'air principal (120) dans la région de l'entrée de raccordement de flux (135) et l'axe de rotation de la soufflante de flux d'air principal (130) est placé perpendiculairement à l'extension longitudinale du conduit de flux d'air principal qui existe au moins (120).

4. Voiture de passagers (100) selon la revendication 1, le dispositif de commande désactivant la soufflante d'air frais (105) lorsque de la fumée est signalée dans l'espace intérieur (144) de la voiture de passagers (100).

5. Voiture de passagers (100) selon la revendication 1, le flux d'air principal (122) étant réchauffé ou refroidi au moyen d'un dispositif combiné de chauffage et de refroidissement.

6. Voiture de passagers (100) selon la revendication 1, les orifices d'entrée (145) étant disposés sur le côté toit (4) par rapport à l'espace intérieur (114) de la voiture de passagers (100) et les orifices de sortie (150) étant disposés sur le côté sol de la voiture de passagers (100).

7. Procédé pour faire fonctionner un système de climatisation (102) pour chauffer, refroidir et/ou ventiler un espace intérieur (114) d'une voiture de passagers (100) selon l'une des revendications précédentes, le procédé étant **caractérisé par** les étapes suivantes :
a) surveillance de l'espace intérieur (114) de la voiture de passagers (100) au moyen d'un détecteur de fumée pour déterminer s'il y a présence de fumée indiquant un feu dans l'espace intérieur (114) ou non ;
b) fonctionnement du système de climatisation (102) dans des conditions de fonctionnement standard au cas où il n'est pas détecté de fumée indiquant un feu, système dans lequel un flux d'air principal (122) est formé comme étant un rapport d'un flux d'air frais (112) aspiré de l'atmosphère et d'un flux d'air de circulation (115) aspiré à partir de l'espace intérieur (114) et est refroidi ou réchauffé, selon les besoins, est dirigé dans l'espace intérieur (114) et
c) fonctionnement du système de climatisation (102) au cas où de la fumée indiquant un feu est détectée dans l'espace intérieur (114) de la voiture de passagers (100) en inversant la direction de flux du flux d'air principal (122) par rapport aux conditions de fonctionnement standard pour mélanger ou aspirer de l'air chargé de fumée de l'espace intérieur (114) dans le flux d'air principal (122) ayant un sens de flux inversé et évacuation d'au moins une partie du flux d'air principal (122) dans l'atmosphère et
d) cependant que, au cas où de la fumée indiquant un feu est détectée dans l'espace intérieur (114) de la voiture de passagers (100), le rapport du flux d'air frais aspiré (112) et de l'air de circulation (118) aspiré à partir de l'espace intérieur (114) est réglé dans le flux d'air principal (122) de telle manière que le flux d'air frais aspiré (118) est sensiblement égal à zéro.
